# EUROPEAN PATENT SPECIFICATION

(11) **EP 2 072 106 B1**
(45) Date of publication and mention of the grant of the patent: **27.03.2013**
(21) Application number: 07425800.5
(22) Date of filing: 18.12.2007
(51) Int. Cl.: B01D 46/10, B01D 46/52

(54) **A method for mounting an air-filter assembly into an heat exchange assembly of a vehicle**
Verfahren zur Anbringung einer Luftfilteranordnung in den Wärmetauscheranordnung eines Fahrzeugs
Méthode de montage d'un ensemble de filtre à air dans l'ensemble échangeur de chaleur d'un véhicule

(43) Date of publication of application: 24.06.2009
(73) Proprietor: DENSO THERMAL SYSTEMS S.p.A., 10046 Poirino (Torino) (IT)
(72) Inventor: Viano, Valter, 10046 Poirino (Torino) (IT)
(74) Representative: Quinterno, Giuseppe

(56) References cited:
- WO-A-01/50071
- FR-A- 2 852 529
- US-A- 5 665 145

## Description

The present invention relates to a method for mounting an air-filter assembly into an heat exchange assembly of a vehicles.

An air-treatment system for vehicles normally comprises a casing forming a treatment chamber connected to an inlet duct in which a fan is installed. Housed in the chamber for treatment of the flow of air are a radiator for heating the air flow, an evaporator forming part of an air-conditioning system, and an air filter. The filter is usually set in a vertical or substantially vertical plane and is set facing the evaporator, upstream of the latter with reference to the direction of the flow of air.

In many cases, there exists the problem of the limited space available for replacement of the air filter. The space available for removal of the filter is limited by the fact that generally arranged on a first side of the casing are set the pipes of the heating water connected to the heating radiator, and set on the opposite side are the pipes for the coolant connected to the evaporator. In these cases, the air filter is usually formed by two separate sections set on top of one another in a vertical plane, which are removed and re-installed separately in positions set on top of one another. An example of a filter assembly of this type is described in the document No. FR-A-2 852 529.

In these cases, installation of the filter entails the following.operations: inserting the top section, displacing upwards the top section and inserting the bottom section, at the same time keeping the top section of the filter raised. This operation is complicated by the small size of the opening for insertion of the filter.

US-A-5665145 discloses a tool which facilitates the removal of rows of filters. WO-A1-0150071 discloses an insert configured to cooperate with a filter to preclude bypass flow around the filter.

The object of the present invention is to provide a method that will enable installation of a filter divided into two sections to be carried out in a simpler and faster way.

According to the present invention, said object is achieved by methods for mounting an air filter assembly having the characteristics forming the subject of Claim 1 and Claim 2.

The characteristics and the advantages of the filter assembly according to the present invention will emerge clearly from the ensuing detailed description, which is provided purely by way of non-limiting example, with reference to the attached drawings, in which:
- Figure 1 is an exploded perspective view of a filter assembly according to the present invention;
- Figure 2 is an assembled perspective view of the filter assembly of Figure 1;
- Figure 3 is a partial cross section according to the line III-III of Figure 2;
- Figures 4-12 illustrate a first sequence of installation of the filter assembly according to the invention; and
- Figures 13-22 illustrate a second sequence of installation of the filter assembly according to the invention.

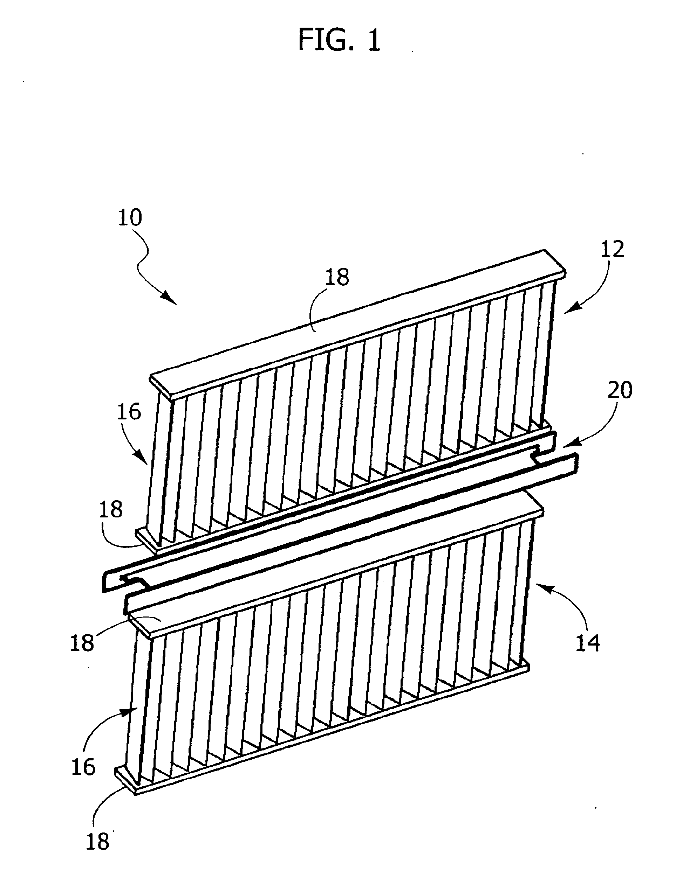

With reference to Figures 1-3, designated by 10 is an air-filter assembly for vehicles according to the present invention. The filter assembly 10 comprises a first filter panel 12 and a second filter panel 14. Preferably, the two filter panels 12, 14 are identical to one another. Each panel 12, 14 comprises a pleated filtering body 16 formed, in a known way, by a strip of pleated filtering material. Each filter panel 12, 14 comprises two mutually parallel rectilinear longitudinal edges 18, which delimit the filtering body 16 in a longitudinal direction. Each longitudinal edge 18 is formed by a rectilinear strip of fibre-based material, for example non-woven fabric or the like. In a way in itself known, the longitudinal edges 18 are fixed in a permanent way to the filtering body 16.

The filter assembly 10 according to the present invention comprises an elongated coupling element 20 that serves as a coupling between the two filter panels 12, 14. The coupling element 20 is preferably made of relatively rigid plastic material and can be obtained using any known technology, such as for example injection moulding and, compression moulding, extrusion, etc.

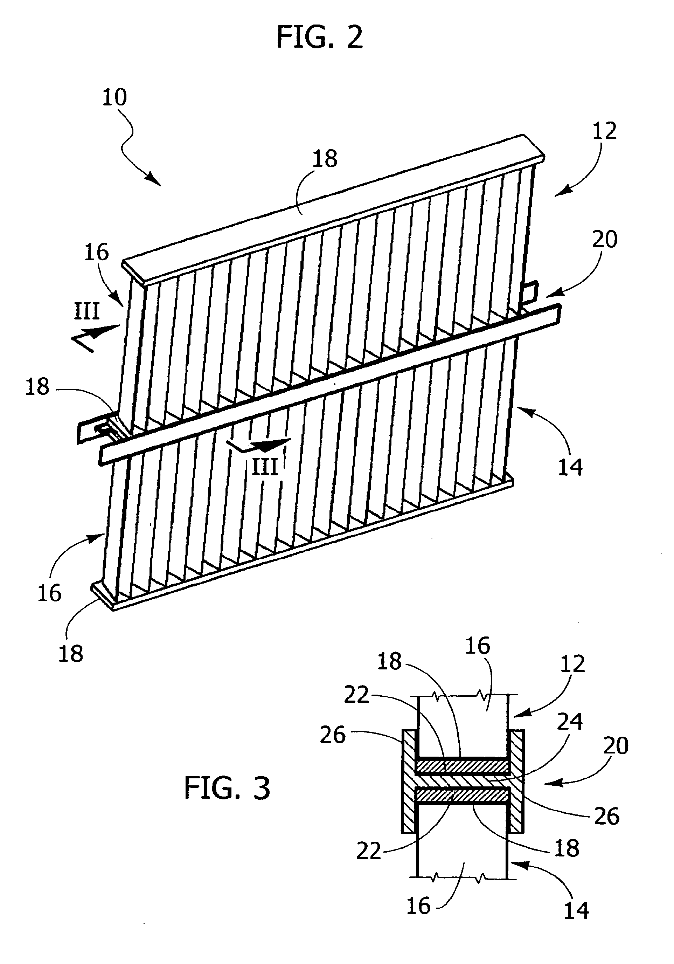

With reference in particular to Figure 3, the coupling element 20 has a substantially H-shaped cross section forming two opposed guides 22, each guide being C-shaped. The coupling element 20 comprises a plane rib 24 and two mutually parallel sides 26, set on opposite sides of the rib 24 and orthogonal to the rib 24. The two guides 22 of the coupling element 24 are sized so as to establish a stable coupling that is able to slide in a longitudinal direction with the edges 18 of the filter panels 12, 14. The coupling between the edges 18 and the guides 22 can present a slight interference, which, however, does not prevent mutual sliding in a longitudinal direction.

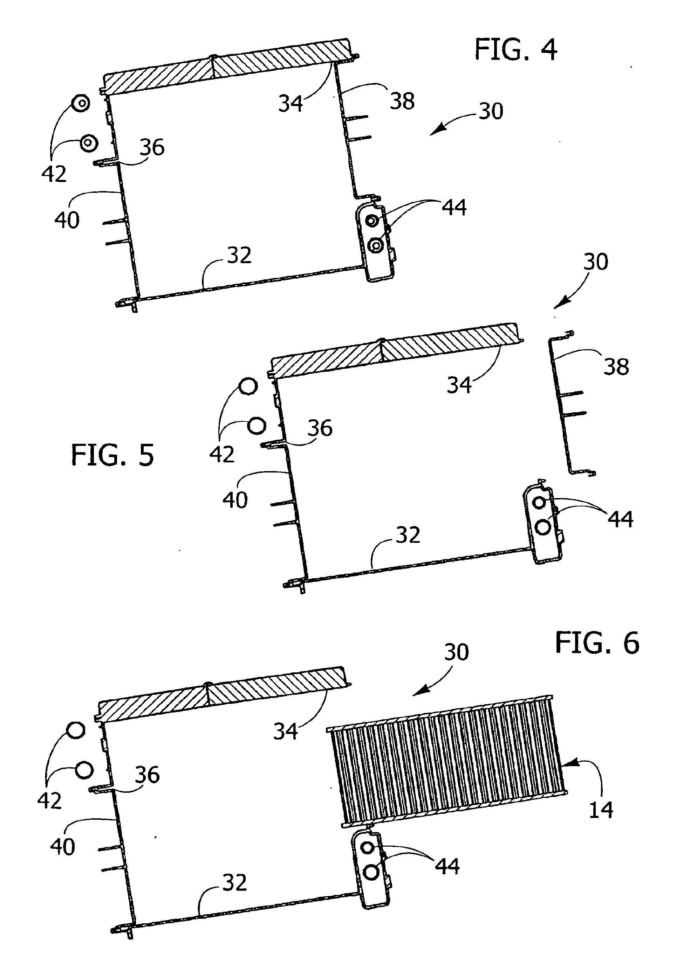

With reference to Figures 4-12, there will now be described a first sequence for installation of the filter assembly 10, previously described, in an air-treatment assembly for vehicles. Designated by 30 in Figure 4 is the housing of the air filter of an air-treatment assembly for vehicles. The housing 30 of the filter comprises a quadrangular seat 32 closed on four sides. The housing 30 has at least one opening closed by a removable lid. In the example illustrated in the figures, two openings 34, 36 are provided, associated to respective removable lids 38, 40. On the outside and on the opposite side of the housing 30 are set two pipes 42, connected to a heating radiator and two pipes 44 connected to an evaporator. The presence of the pipes 42, 44 on the outside of the housing 30 prevents openings 34, 36 being made with dimensions equal to the entire height of the seat of the filter 32 and renders necessary the use of a filter assembly made up of two panels 12, 14, each of which has a height smaller than the height of the opening 34, 36.

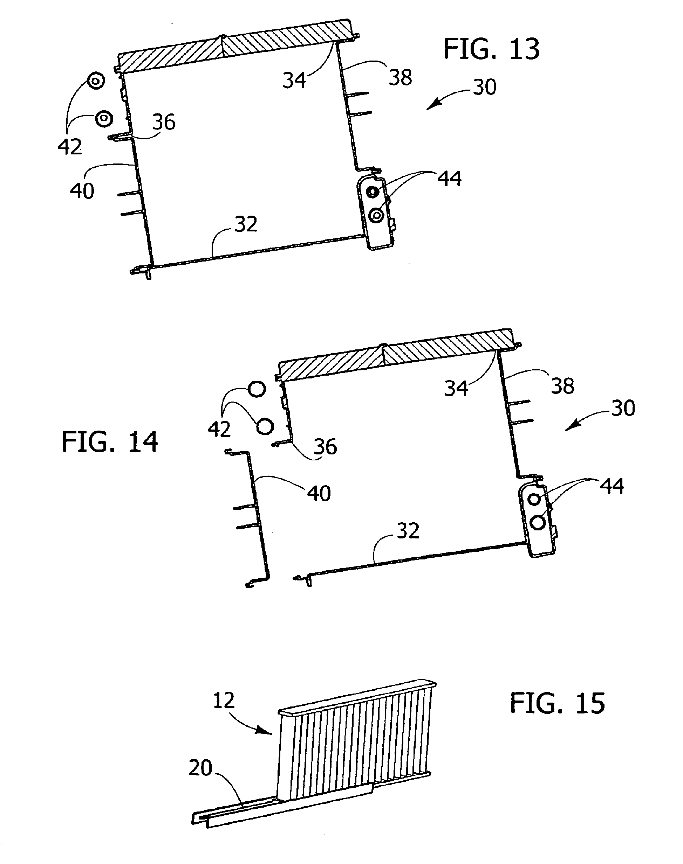

Figures 4-12 illustrate the sequence for installation of the filter assembly 10 in a vehicle in which the replacement of the filter is envisaged on the right-hand side of the vehicle. Figures 13-22 illustrate the sequence for installation of the filter assembly 10 in vehicles in which the replacement of the filter is envisaged on the left-hand side of the vehicle.

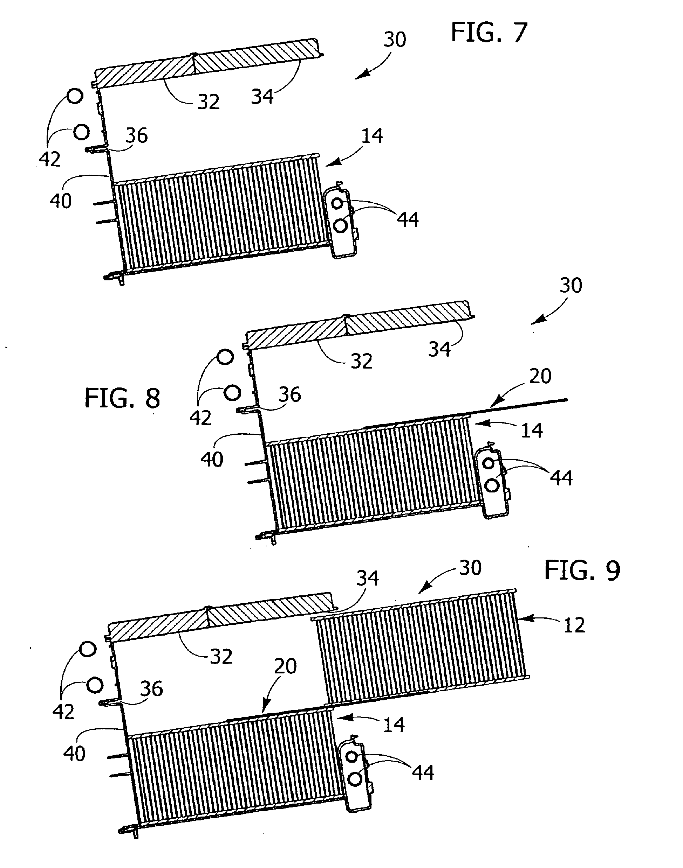

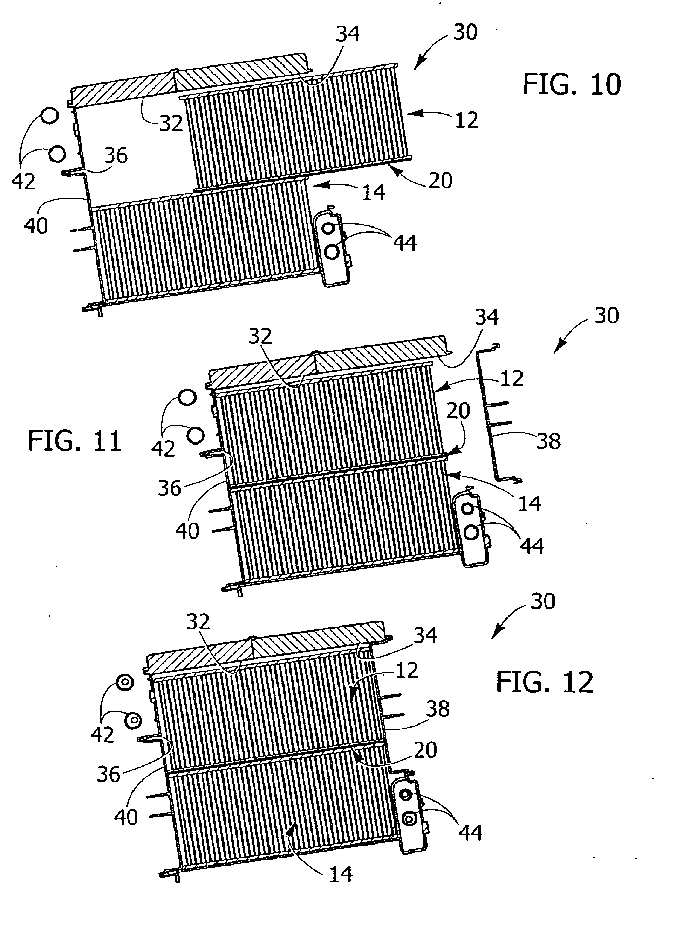

The procedure for installation of the filter on the right-hand side of the vehicle envisages, in a first step, removal of the lid 38 of the right-hand side (Figure 5). Then, the bottom filter panel 14, is inserted through the opening 34, as illustrated in Figures 6 and 7. Subsequently, as illustrated in Figure 8, the coupling element 20 is inserted on the top edge 18 of the filter panel 14. A part of the coupling element 20 is left on the outside of the opening 34. Then, as illustrated in Figure 9, the top filter panel 12 is inserted on the top part of the coupling element 20. Then, the top filter panel 12 is slid into the housing, together with the coupling element 20 (Figure 11). Finally, the lid 38 is applied again on the opening 34, as illustrated in Figures 11 and 12.

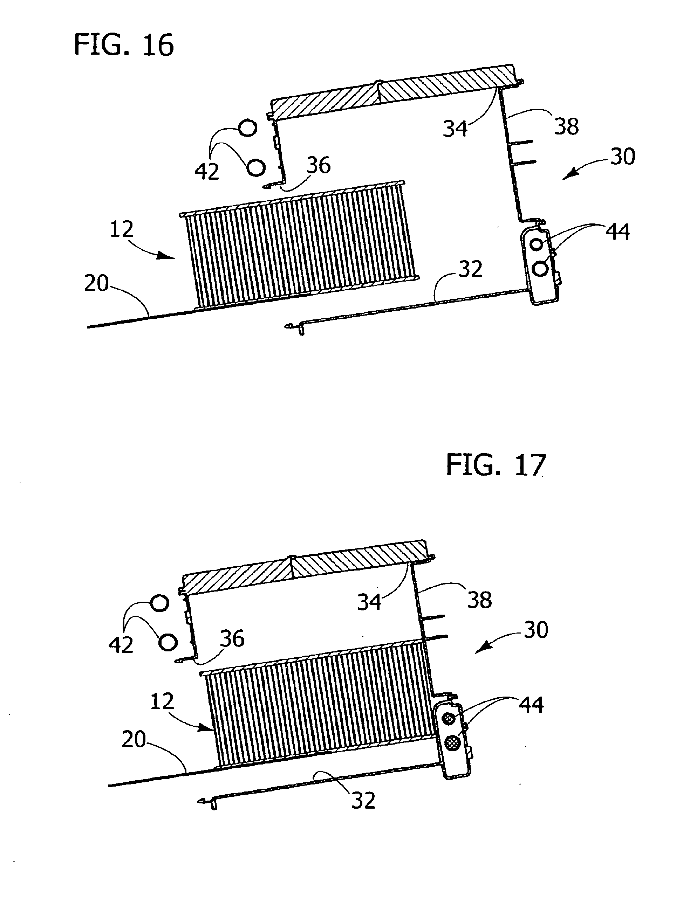

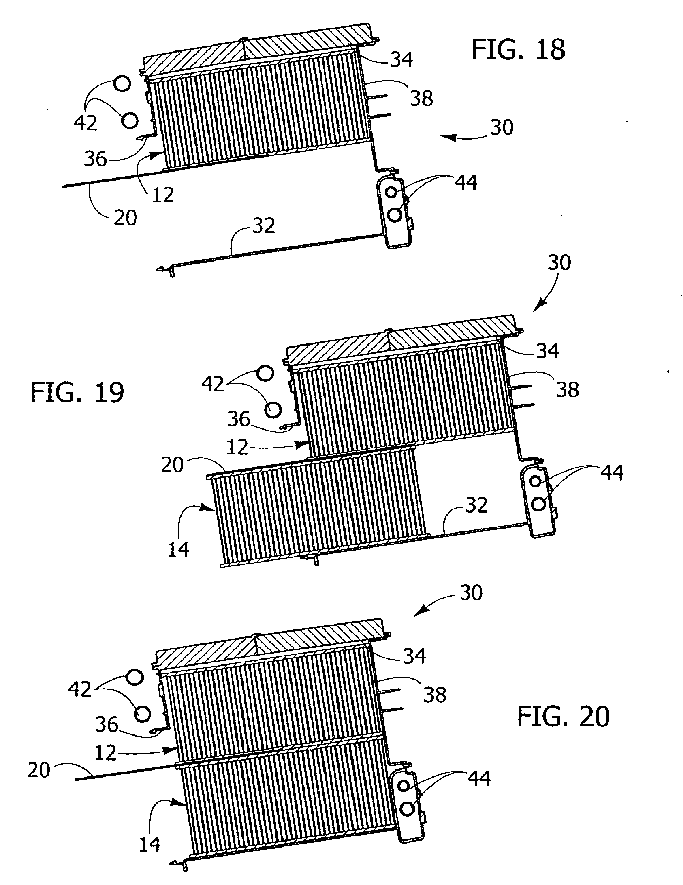

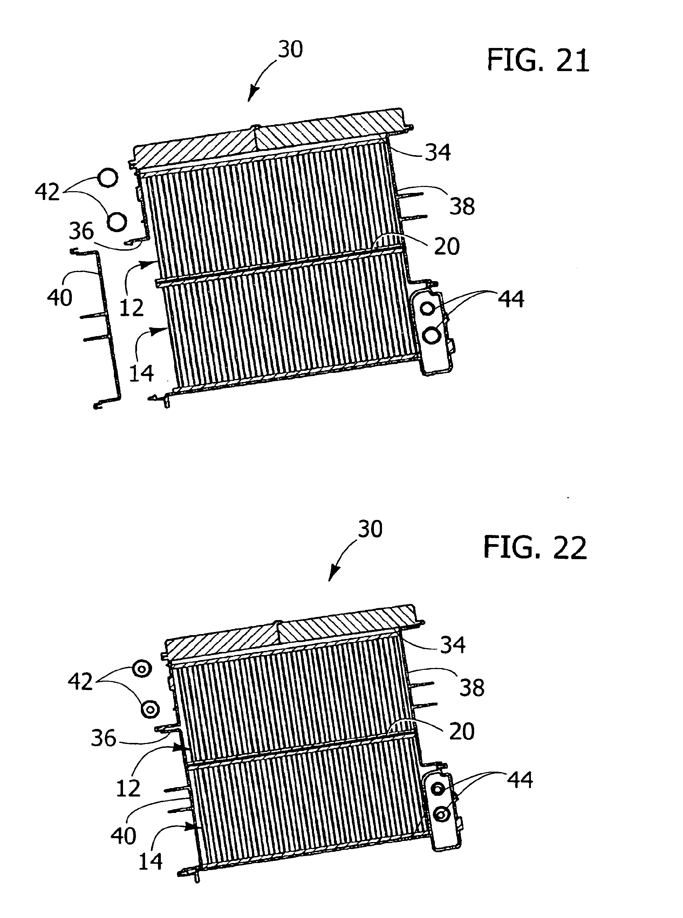

With reference to Figures 13-22, there will now be described the procedure for installation of the filter assembly 10 on the left-hand side of the vehicle. In a first step, as illustrated in Figures 13 and 14, the lid 40 of the left-hand side is removed. Then, as illustrated in Figure 15, the top filter panel 12 is fitted on the coupling element 20. For greater convenience of installation, it is preferable for the top filter panel 12 to be fitted only on one half of the coupling element 20, as illustrated in Figure 15. The top filter panel 12 and the coupling element 20 are then inserted through the opening of the left-hand side 36, as illustrated in Figures 16 and 17. After insertion of the top filter panel 12 in the seat 32, the top filter panel 12 is displaced upwards, as illustrated in Figure 18, the filter panel being at the same time supported by means of the portion of the coupling element 20 that projects on the outside of the opening 36. Then, the bottom filter panel 14 is inserted and coupled with the coupling element 20, as illustrated in Figures 19 and 20. Then, the coupling element 20 is pushed home in the seat 32, as illustrated in Figure 21. Finally, the lid 40 is applied again on the opening 36, as illustrated in Figure 22.

From the foregoing description, it emerges clearly that the coupling element 20 enables simplification of installation of a filter assembly in two parts. The coupling element 20 makes it possible to guide insertion of the filter panel, which is inserted subsequently and makes it possible to support the filter panel, which has been inserted first, in a raised position. The coupling element 20 moreover enables the area of joining between the two filter panels 12, 14 to be sealed in a hermetic way.

## Claims

1. A method for mounting an air filter assembly into an heat-exchange assembly of a vehicle, the heat-exchange assembly comprising a housing (30), having a substantially quadrangular filter seat (32), provided with at least one opening (36) closed by a removable lid (40), said opening having a height smaller than the height of the filter seat (32) and being provided on bottom of a lateral side of said filter seat (32), the air-filter assembly (10) comprising a top filter panel (12) and a bottom filter panel (14), each filter panel (12, 14) having a pleated filtering body (16) and two mutually parallel rectilinear longitudinal edges (18) that delimit said filtering body (16) in a longitudinal direction, each filter panel (12, 14) having a height smaller than the height of said filter seat (32), **characterized in that** the air-filter assembly (10) comprises an elongated coupling element (20) having a substantially H-shaped cross section, forming two opposite guides (22) that slidingly couple in a longitudinal direction with respective longitudinal edges (18) of the top and bottom filter panel (12, 14), the method comprising the steps of:
- removing the lid (40),
- engaging a first guide (22) of said coupling element (20) on a longitudinal bottom edge (18) of the top filter panel (12),
- inserting said top filter panel (12) through said opening (36) leaving a part of the coupling element (20) outside said opening (36),
- displacing said top filter panel (12) toward a top side of said filter seat (32),
- engaging a longitudinal top edge (18) of said bottom filter panel (14) on a second guide (22) of said coupling element (20) and sliding the bottom filter panel (14) into said filter seat (32) together with the coupling element (20).

2. A method for mounting an air filter assembly into an heat-exchange assembly of a vehicle, the heat-exchange assembly comprising a housing (30), having a substantially quadrangular filter seat (32), provided with at least one opening (34) closed by a removable lid (38), said opening having a height smaller than the height of the filter seat (32) and being provided on top of a lateral side of said filter seat (32), the air-filter assembly (10) comprising a top filter panel (12) and a bottom filter panel (14), each filter panel (12, 14) having a pleated filtering body (16) and two mutually parallel rectilinear longitudinal edges (18) that delimit said filtering body (16) in a longitudinal direction, each filter panel (12, 14) having a height smaller than the height of said filter seat (32), **characterized in that** the air-filter assembly (10) comprises an elongated coupling element (20) having a substantially H-shaped cross section, forming two opposite guides (22) that slidingly couple in a longitudinal direction with respective longitudinal edges (18) of the top and bottom filter panel (12, 14), the method comprising the steps of:
- removing the lid (38),
- inserting said bottom filter panel (14) through said opening (34) into said filter seat (32),
- displacing said bottom filter panel (14) toward a bottom side of said filter seat (32),
- engaging a first guide (22) of said coupling element (20) on a longitudinal top edge (18) of the bottom filter panel (14) so that a part of the coupling element (20) is left on the outside of said opening,
- engaging a longitudinal bottom edge of said top filter panel (12) on a second guide (22) of said coupling element (20) and sliding the top filter panel (12) into said filter seat (32) together with the coupling element (20).

## Patentansprüche

1. Verfahren zum Montieren einer Luftfilteranordnung in einer Wärmetauschereinheit eines Fahrzeugs, wobei die Wärmetauschereinheit ein Gehäuse (30) mit einem im Wesentlichen viereckigen Filtersitz (32) aufweist, der mindestens eine Öffnung (36) aufweist, die durch eine entfernbare Abdeckung (40) verschlossen ist, wobei die Öffnung eine Höhe hat, die kleiner ist als die Höhe des Filtersitzes (32), und wobei die Öffnung an einem unteren Abschnitt einer lateralen Seite des Filtersitzes (32) ausgebildet ist, wobei die Luftfilteranordnung (10) ein oberes Filterelement (12) und ein unteres Filterelement (14) aufweist, wobei jedes Filterelement (12, 14) einen Faltenfilterkörper (16) und zwei wechselseitig parallele geradlinige Längsränder (18) aufweist, die den Filterkörper (16) in einer Längsrichtung begrenzen, wobei jedes Filterelement (12, 14) eine Höhe hat, die kleiner ist als die Höhe des Filtersitzes (32);
**dadurch gekennzeichnet, dass**
die Luftfilteranordnung (10) ein längliches Verbindungselement (20) mit einem im Wesentlichen H-förmigen Querschnitt aufweist, das zwei gegenüberliegende Führungen (22) bildet, die in einer Längsrichtung mit den Längsrändern (18) des oberen und des unteren Filterelements (12, 14) gleitend in Eingriff kommen,
wobei das Verfahren die Schritte aufweist:
Entfernen der Abdeckung (40);
Ineingriffbringen einer ersten Führung (22) des Verbindungselements (20) mit einem unteren Längsrand (18) des oberen Filterelements (12);
Einsetzen des oberen Filterelements (12) durch die Öffnung (36) derart, dass ein Teil des Verbindungselements (20) außerhalb der Öffnung (36) verbleibt;
Verschieben des oberen Filterelements (12) zu einer Oberseite des Filtersitzes (32) hin;
Ineingriffbringen eines oberen Längsrandes (18) des unteren Filterelements (14) mit einer zweiten Führung (22) des Verbindungselements (20) und Schieben des unteren Filterelements (14) zusammen mit dem Verbindungselement (20) in den Filtersitz (32).

2. Verfahren zum Montieren einer Luftfilteranordnung in einer Wärmetauschereinheit eines Fahrzeugs, wobei die Wärmetauschereinheit ein Gehäuse (30) mit einem im Wesentlichen viereckigen Filtersitz (32) aufweist, der mindestens eine Öffnung (34) aufweist, die durch eine entfernbare Abdeckung (38) verschlossen ist, wobei die Öffnung eine Höhe hat, die kleiner ist als die Höhe des Filtersitzes (32), und wobei die Öffnung an einem oberen Abschnitt einer lateralen Seite des Filtersitzes (32) ausgebildet ist, wobei die Luftfilteranordnung (10) ein oberes Filterelement (12) und ein unteres Filterelement (14) aufweist, wobei jedes Filterelement (12, 14) einen Faltenfilterkörper (16) und zwei wechselseitig parallele geradlinige Längsränder (18) aufweist, die den Filterkörper (16) in einer Längsrichtung begrenzen, wobei jedes Filterelement (12, 14) eine Höhe hat, die kleiner ist als die Höhe des Filtersitzes (32);
**dadurch gekennzeichnet, dass**
die Luftfilteranordnung (10) ein längliches Verbindungselement (20) mit einem im Wesentlichen H-förmigen Querschnitt aufweist, das zwei gegenüberliegende Führungen (22) bildet, die in einer Längsrichtung mit den Längsrändern (18) des oberen und des unteren Filterelements (12, 14) gleitend in Eingriff kommen,
wobei das Verfahren die Schritte aufweist:
Entfernen der Abdeckung (38);
Einsetzen des unteren Filterelements (14) durch die Öffnung (34) in den Filtersitz (32);
Verschieben des unteren Filterelements (14) zu einer Unterseite des Filtersitzes (32) hin;
Ineingriffbringen einer ersten Führung (22) des Verbindungselements (20) mit einem oberen Längsrand (18) des unteren Filterelements (14) derart, dass ein Teil des Verbindungselements (20) außerhalb der Öffnung verbleibt; und
Ineingriffbringen eines unteren Längsrandes des oberen Filterelements (12) mit einer zweiten Führung (22) des Verbindungselements (20) und Schieben der oberen Filterplatte (12) zusammen mit dem Verbindungselement (20) in den Filtersitz (32).

## Revendications

1. Procédé de montage d'un ensemble de filtre à air dans un ensemble échangeur de chaleur d'un véhicule, l'ensemble échangeur de chaleur comprenant un boîtier (30), comportant un siège de filtre substantiellement quadrangulaire (32), pourvu d'au moins une ouverture (36) fermée par un couvercle amovible (40), ladite ouverture ayant une hauteur inférieure à la hauteur du siège de filtre (32) et étant placée sur la partie inférieure d'un côté latéral dudit siège de filtre (32), l'ensemble de filtre à air (10) comprenant un panneau de filtre supérieur (12) et un panneau de filtre inférieur (14), chaque panneau de filtre (12, 14) ayant un corps filtrant plissé (16) et deux bords longitudinaux rectilignes et mutuellement parallèles (18) qui délimitent ledit corps filtrant (16) dans une direction longitudinale, chaque panneau de filtre (12, 14) ayant une hauteur inférieure à la hauteur dudit siège de filtre (32),
**caractérisé en ce que** l'ensemble de filtre à air (10) comprend un élément d'accouplement allongé (20) de section substantiellement en forme de H, formant deux guides opposés (22) qui s'accouplent de façon glissante dans une direction longitudinale avec des bords longitudinaux respectifs (18) des panneaux de filtre supérieur et inférieur (12, 14), le procédé comprenant les étapes suivantes :
- retirer le couvercle (40),
- engager un premier guide (22) dudit élément d'accouplement (20) sur un bord longitudinal inférieur (18) du panneau de filtre supérieur (12),
- insérer ledit panneau de filtre supérieur (12) par ladite ouverture (36) en laissant une partie de l'élément d'accouplement (20) à l'extérieur de ladite ouverture (36),
- déplacer ledit panneau de filtre supérieur (12) vers un côté supérieur dudit siège de filtre (32),
- engager un bord longitudinal supérieur (18) du panneau de filtre inférieur (14) sur un deuxième guide (22) dudit élément d'accouplement (20) et faire glisser le panneau de filtre inférieur (14) dans ledit siège de filtre (32) en même temps que l'élément d'accouplement (20).

2. Procédé de montage d'un ensemble de filtre à air dans un ensemble échangeur de chaleur d'un véhicule, l'ensemble échangeur de chaleur comprenant un boîtier (30), comportant un siège de filtre substantiellement quadrangulaire (32), pourvu d'au moins une ouverture (34) fermée par un couvercle amovible (38), ladite ouverture ayant une hauteur inférieure à la hauteur du siège de filtre (32) et étant placée dans la partie supérieure d'un côté latéral dudit siège de filtre (32), l'ensemble de filtre à air (10) comprenant un panneau de filtre supérieur (12) et un panneau de filtre inférieur (14), chaque panneau de filtre (12, 14) ayant un corps filtrant plissé (16) et deux bords longitudinaux rectilignes et mutuellement parallèles (18) qui délimitent ledit corps filtrant (16) dans une direction longitudinale, chaque panneau de filtre (12, 14) ayant une hauteur inférieure à la hauteur dudit siège de filtre (32),
**caractérisé en ce que** l'ensemble de filtre à air (10) comprend un élément d'accouplement allongé (20) de section substantiellement en forme de H, formant deux guides opposés (22) qui s'accouplent de façon glissante dans une direction longitudinale avec des bords longitudinaux respectifs (18) des panneaux de filtre supérieur et inférieur (12, 14), le procédé comprenant les étapes suivantes :
- retirer le couvercle (38),
- insérer ledit panneau de filtre inférieur (14) dans ledit siège de filtre (32) en le faisant passer dans ladite ouverture (34),
- déplacer ledit panneau de filtre inférieur (14) vers un côté inférieur dudit siège de filtre (32),
- engager un premier guide (22) dudit élément d'accouplement (20) sur un bord longitudinal supérieur (18) du panneau de filtre inférieur (14) de telle manière qu'une partie de l'élément d'accouplement (20) est laissée à l'extérieur de ladite ouverture,
- engager un bord longitudinal inférieur du panneau de filtre supérieur (12) sur un deuxième guide (22) du l'élément d'accouplement (20) et faire glisser le panneau de filtre supérieur (12) dans le siège de filtre (32) en même temps que l'élément d'accouplement (20).
